# EUROPEAN PATENT APPLICATION

(11) **EP 4 471 558 A1**
(43) Date of publication of application: **04.12.2024**
(21) Application number: 23829676.8
(22) Date of filing: 27.04.2023
(51) Int. Cl.: G06F 3/0481

(54) **WINDOW DISPLAY METHOD, ELECTRONIC DEVICE AND COMPUTER-READABLE STORAGE MEDIUM**

(30) Priority: 01.07.2022 CN 202210774306
(71) Applicant: Honor Device Co., Ltd., Shenzhen, Guangdong 518040 (CN)
(72) Inventor: REN, Ping, Shenzhen, Guangdong 518040 (CN)
(74) Representative: Beder, Jens
(86) International application number: PCT/CN2023/091250
(87) International publication number: WO 2024/001490

(57) **Abstract**

This application provides a window display method and an electronic device, and belongs to the field of electronic technologies. The method is applied to the electronic device, and the method includes: receiving an open operation for a specific control displayed on a screen of the electronic device; and in response to the open operation, when it is determined that a current display interface of the electronic device is a home screen background, displaying, by the electronic device, content of the application in a full-screen manner; or when it is determined that there is a program running on the current display interface of the electronic device, displaying, by the electronic device, the content of the application in a floating window manner. According to the method in embodiments of this application, when a mobile phone determines that a display interface on a screen is a home screen background, application content corresponding to an application is displayed in a full-screen manner, and display of a floating window is logically optimized, to meet visual comfort of a user to full-screen display, thereby improving user experience.

## Description

This application claims priority to Chinese Patent Application No. 202210774306.7, filed with the China National Intellectual Property Administration on July 1, 2022 and entitled "WINDOW DISPLAY METHOD, ELECTRONIC DEVICE, AND COMPUTER-READABLE STORAGE MEDIUM", which is incorporated herein by reference in its entirety.

### TECHNICAL FIELD

This application relates to the field of electronic technologies, and in particular, to a window display method, an electronic device and a computer-readable storage medium.

### BACKGROUND

With the development of science and technology, electronic device products develop rapidly. Generally, a user installs various applications (Application, APP) on an electronic device. After installation, the application may be opened in a plurality of manners. For example, the application is opened by tapping an application icon on a home screen of the electronic device, or the application is opened by tapping the application icon from a side application bar after the side application bar is pulled up.

### SUMMARY

In view of this, the present invention provides a window display method and an electronic device. According to the method, an application may be opened in a full-screen manner when a display interface is a home screen background.

Some implementations of this application provide a window display method and an electronic device. The following describes this application from a plurality of aspects. For implementations and beneficial effects of the following plurality of aspects, references may be made to each other.

According to a first aspect, the present invention provides a window display method, applied to an electronic device. The method includes: receiving an open operation for a specific control displayed on a screen of the electronic device; and in response to the open operation, when it is determined that a current display interface of the electronic device is a home screen background, displaying content of an application in a full-screen manner; or when it is determined that there is a program running on the current display interface of the electronic device, displaying, by the electronic device, the content of the application in a floating window manner.

The open operation for the specific control may be an operation such as tapping the application from a side application bar or tapping the application from a drop-down window, and a floating window is used to present the content of the application corresponding to the specific control in a size smaller than that of the home screen background.

In the foregoing implementation, when detecting the open operation performed by a user on the specific control displayed on the screen, and determining that the current display interface is the home screen background, the electronic device may display the content of the application in the full-screen manner, thereby improving visual experience of the user.

With reference to the first aspect, in some implementations of the first aspect, the open operation is at least one tap on the specific control, or dragging the specific control. For example, the open operation is an operation such as tapping an application banner in the drop-down window or tapping the application from the side application bar.

With reference to the first aspect, in some implementations of the first aspect, the specific control is a pop-up control, for example, a notification message bar.

With reference to the first aspect, in some implementations of the first aspect, the pop-up control is a popped up notification message control. For example, the pop-up control may be an application notification banner in the drop-down window.

With reference to the first aspect, in some implementations of the first aspect, the open operation is a drag operation performed on a bar in the popped up notification message control. For example, the application notification banner in the drop-down window may be dragged.

With reference to the first aspect, in some implementations of the first aspect, the pop-up control is a pop-up application bar, for example, may be the side application bar.

With reference to the first aspect, in some implementations of the first aspect, the open operation is a tap operation for an application icon in the pop-up application bar. For example, an application icon in the side application bar may be tapped.

With reference to the first aspect, in some implementations of the first aspect, the specific control is a floating control, for example, may be a side floating ball.

With reference to the first aspect, in some implementations of the first aspect, the open operation is a direct open operation for the floating control, for example, the side floating ball may be tapped.

With reference to the first aspect, in some implementations of the first aspect, the open operation is an open operation for an application icon that is on a home screen and that corresponds to the floating control. For example, the side floating ball corresponds to a home screen application, and the home screen application corresponding to the side floating ball may be opened by tapping the side floating ball.

This application further provides an electronic apparatus, including:
a receiving module, configured to receive an open operation for a specific control displayed on a screen of an electronic device, where the open operation is used to present, in a floating window manner, content of an application corresponding to the specific control; and
a processing module, configured to: in response to the open operation, when it is determined that a current display interface of the electronic device is a home screen background, display the content of the application in full screen by using a display module; or when it is determined that there is already a program running on the current display interface of the electronic device, display the content of the application in a floating window manner by using the display module.

With reference to the first aspect, in some implementations of the second aspect, the open operation is at least one tap on the specific control, or dragging the specific control.

With reference to the first aspect, in some implementations of the second aspect, the specific control is a pop-up control.

With reference to the first aspect, in some implementations of the second aspect, the pop-up control is a popped up notification message control, for example, a notification message bar.

With reference to the first aspect, in some implementations of the second aspect, the open operation is a drag operation performed on a bar in the popped up notification message control.

With reference to the first aspect, in some implementations of the second aspect, the pop-up control is a pop-up application bar, for example, a side bar.

With reference to the first aspect, in some implementations of the second aspect, the open operation is a tap operation for an application icon in the pop-up application bar.

With reference to the first aspect, in some implementations of the second aspect, the specific control is a floating control, for example, a floating ball.

With reference to the first aspect, in some implementations of the second aspect, the open operation is a direct open operation for the floating control.

With reference to the first aspect, in some implementations of the second aspect, the open operation is an open operation for an application icon that is on a home screen and that corresponds to the floating control.

According to a second aspect, this application further provides an electronic device, including: a memory, configured to store instructions executed by one or more processors of the device; and a processor, configured to execute the instructions, to enable the electronic device to perform any method in the technical solution of the first aspect.

According to a third aspect, this application further provides a computer-readable storage medium. The computer-readable storage medium stores a computer program, and the computer program, when executed by a processor, enables the processor to perform any method in the technical solution of the first aspect.

According to a fourth aspect, this application further provides a computer program product including instructions. When the computer program product runs on an electronic device, a processor performs any method in the technical solution of the first aspect.

### BRIEF DESCRIPTION OF DRAWINGS

FIG. 1A and FIG. 1B are a schematic diagram of interfaces of opening a floating window on a mobile phone according to an embodiment of this application;
FIG. 2 is a schematic diagram of a visible area range in which a human eye views a screen of a mobile phone according to an embodiment of this application;
FIG. 3 is a schematic diagram of preference statistics for starting a chat APP in different backgrounds by a user group according to an embodiment of this application;
FIG. 4A and FIG. 4B are diagrams of interfaces of a mobile phone according to an embodiment of this application;
FIG. 5 is a schematic diagram of a structure of an electronic device according to an embodiment of this application;
FIG. 6 is a block diagram of a software structure of an electronic device according to an embodiment of this application;
FIG. 7 is a flowchart of a window display method according to an embodiment of this application;
FIG. 8 is a flowchart of another window display method according to an embodiment of this application;
FIG. 9A, FIG. 9B, and FIG. 9C are a schematic diagram of operation interfaces of opening, by a user, an application window through a side bar in a home screen background according to an embodiment of this application;
FIG. 10A and FIG. 10B are a schematic diagram of operation interfaces of opening, by a user, an application window through a side bar in a non-home screen background according to an embodiment of this application;
FIG. 11 is a schematic diagram of an interface of an application whitelist according to an embodiment of this application;
FIG. 12A, FIG. 12B, and FIG. 12C are a schematic diagram of an interface operation during running of an application in a whitelist according to an embodiment of this application;
FIG. 13A and FIG. 13B are a schematic diagram of an interface operation for opening an application window from a notification message bar according to an embodiment of this application;
FIG. 14A and FIG. 14B are a schematic diagram of an interface operation for opening an application window from a floating ball according to an embodiment of this application;
FIG. 15A and FIG. 15B are a schematic diagram of another interface operation for opening an application window from a floating ball according to an embodiment of this application; and
FIG. 16 is a block diagram of a system on chip according to some embodiments of this application.

### DESCRIPTION OF EMBODIMENTS

The following clearly and completely describes technical solutions in embodiments of this application with reference to the accompanying drawings in the embodiments of this application.

To facilitate understanding of the technical solutions of this application, technical problems to be resolved in this application are first described.

In some solutions, when a user taps an application control in a home screen background interface on a mobile phone screen, an application is opened in a form of a small window (floating window). For example, the user taps an application control (application icon) in a side bar, taps an application that has been opened and minimized into a floating ball, or taps a corresponding application in a notification bar.

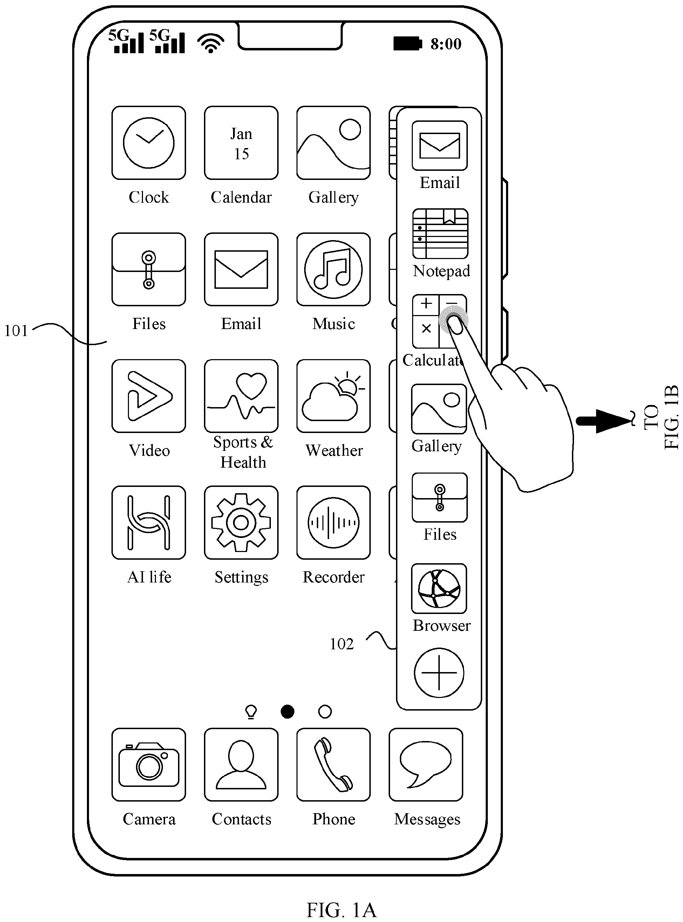

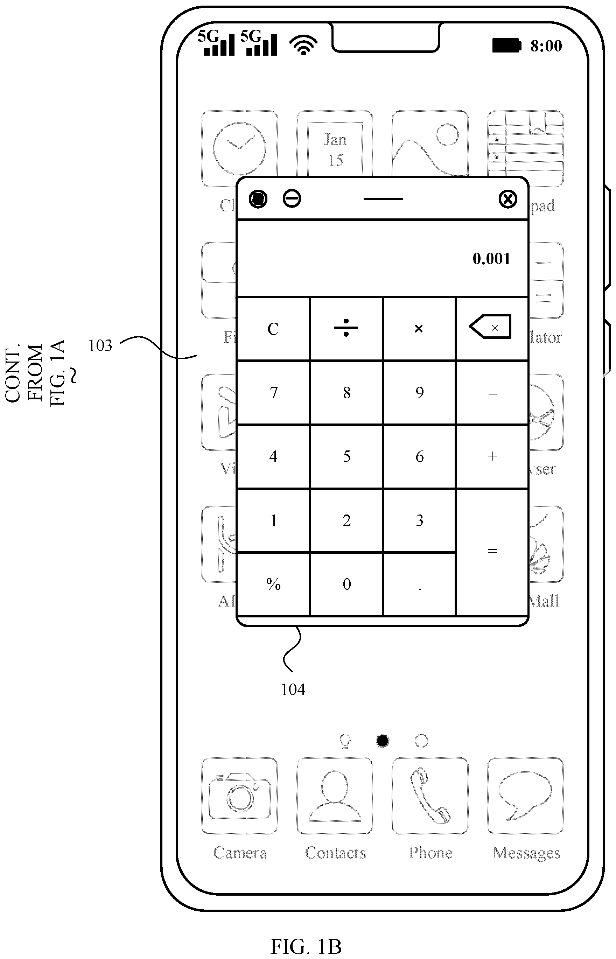

For example, as shown in FIG. 1A and FIG. 1B, FIG. 1A and FIG. 1B are schematic diagrams of interfaces of opening a floating window on a mobile phone. As shown in FIG. 1A, when a home screen is used as a background in an interface 101, after the user pulls out a side bar 102 and taps a "calculator" application icon in the side bar, an application window is displayed in a form of a floating window. As shown in FIG. 1B, in an interface 103, the background on the screen is the home screen background, and the calculator application is opened in the form of a floating window on the screen.

In the foregoing scenario, when executing a window display command, the mobile phone identifies only an operation manner entered by the user when the application is opened, for example, as shown in FIG. 1A and FIG. 1B, an operation for opening the application by tapping the application icon in the side bar of the interface. After identifying the operation entered by the user, the mobile phone displays the floating window in the interface. In this process, the mobile phone does not determine an interface background of a corresponding operation. In other words, regardless of whether a current interface background is the home screen background or a background of a running application window, the application will be opened in a form of a small window only by tapping the application icon in the side bar.

However, because a structure of a human eye determines a visible area and a viewing angle of the human eye, a limitation may be imposed. Therefore, in terms of comfort of visual experience of the user when a single application is opened on a mobile phone or a tablet, the user prefers to open a single-task application in a full-screen manner.

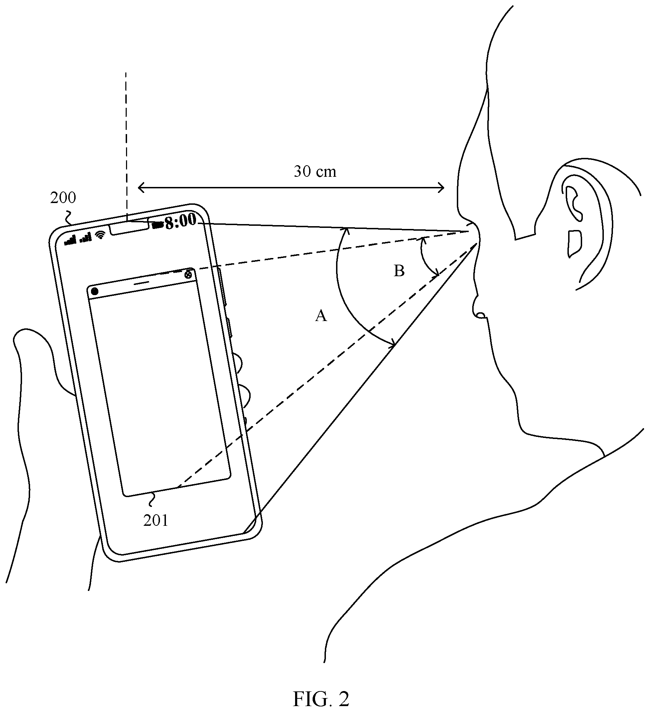

A mobile phone is used as an example. Refer to FIG. 2. FIG. 2 is a schematic diagram of a visible area range in which a human eye views a screen of the mobile phone. An optimal viewing distance of the human eye to the mobile phone 200 is 30 cm, and a viewing angle range of the human eye at this distance is A, which can exactly present the most comfortable visual experience when the mobile phone 200 displays an application window in a full-screen manner. However, if the application window is displayed on an interface of a floating window 201, comfort visual experience cannot be provided for the user because a size of the floating window 201 is less than a size of the screen, an angle range between the floating window 201 and the human eye is B, and the range is less than the natural viewing angle range A when the human eye is 30 cm away from the mobile phone. In addition, when the application window is displayed in a form of a floating window, light reflected from other positions of the screen is also reflected back to the eye, which affects concentration of a line of sight of the user, thereby reducing user experience.

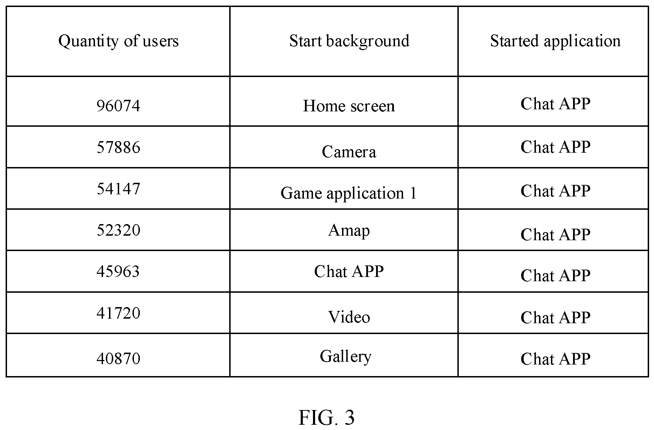

In addition, data statistics show that most users prefer to open a single application (single task) on an interface of the mobile phone. That is, a percentage of users who directly open a single application on the home screen is far higher than a percentage of users who open a plurality of applications at the same time. As shown in FIG. 3, FIG. 3 is a schematic diagram of preference statistics for starting a chat APP in different backgrounds by a user group according to an embodiment of this application. As shown in FIG. 3, a scenario in which users open a chat application through a side bar is used as an example. According to statistics, a quantity of users who directly open a "chat app" through the side bar from the "home screen" is "96074". In a background in which one application is opened, a second application is enabled. For example, in a background in which a "camera" application is opened, a quantity of users who open a "chat APP" is "57886"; and in a background in which a "game application 1" is opened, a quantity of users who open a "chat APP" is "54147". It can be learned from statistical data in FIG. 3 that a quantity of users who open a "start application" when a "start background" is the "home screen" is far greater than a quantity of users who open a "start application" when the "start background" is an application. It can be learned from this that most user groups prefer to start an application in a home screen background. However, in an existing open manner, even in the home screen background, an application is opened in a small window (floating window) manner, rather than in a full-screen manner. Based on the foregoing analysis in FIG. 2, it can be learned that a user prefers to display a window in a full-screen manner in the home screen background. Therefore, it can be learned from the data in FIG. 3 that there is a large quantity of users having a requirement for display optimization of a window and it is necessary to improve a floating window display manner.

Based on the foregoing existing problems, this application provides a window display method, which optimizes the logic of floating window display, to improve user experience.

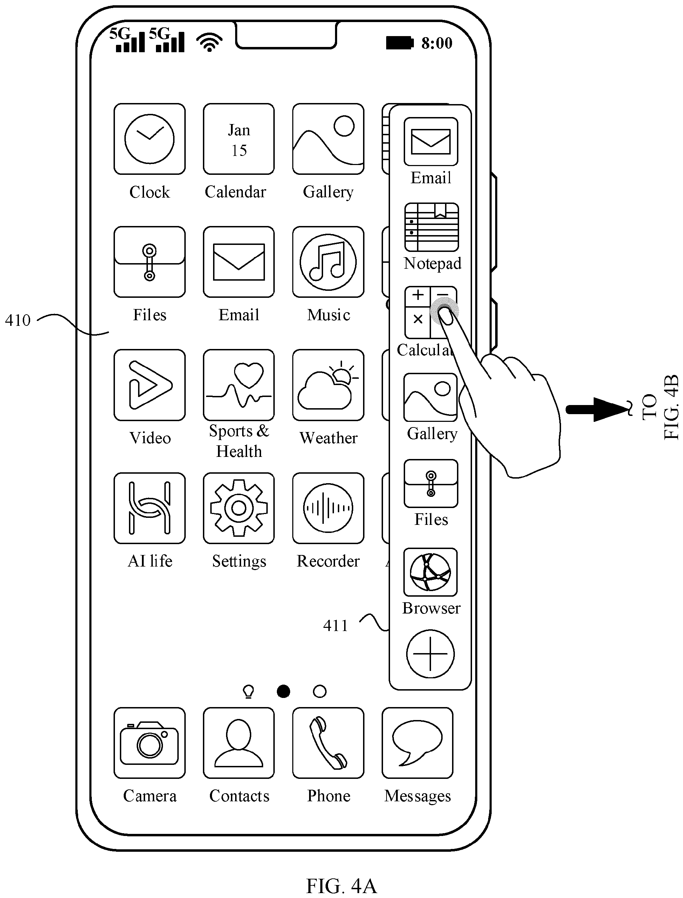

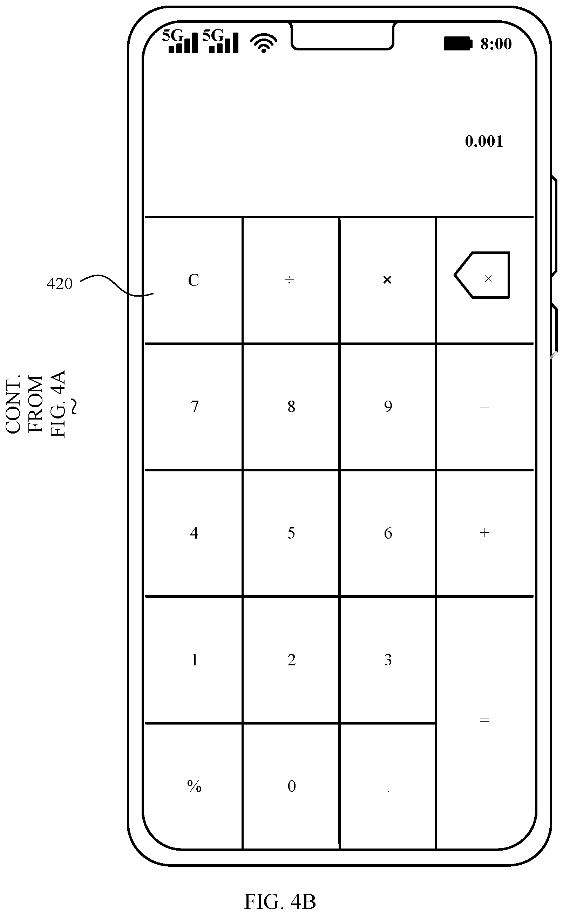

The window display method in an embodiment of this application is described with reference to a scenario shown in FIG. 4A and FIG. 4B. FIG. 4A and FIG. 4B are diagrams of interfaces of a mobile phone according to an embodiment of this application. As shown in FIG. 4A, in a home screen background interface 410, when the mobile phone receives a single-tap operation (open operation) for a "calculator" application in a side bar (specific control) on a screen, the mobile phone determines whether there is a running program on the current screen, for example, a running application window. If there is no running program, it indicates that the current interface is a home screen background. In this case, the mobile phone displays an application window in full screen in response to the operation in FIG. 4A. As shown in FIG. 4B, in an interface 420, the application window corresponding to the calculator application is displayed in full screen. Therefore, in a case of the home screen background, when a single application is opened, content corresponding to the application is displayed in full screen, to improve a visual effect of a user, thereby improving user experience.

In the foregoing scenario, the side bar is used as a specific control for description. In some embodiments of this application, the specific control may be another control. For example, after an application is opened, the application is scaled down and forms a floating ball on the home screen. In this case, the specific control may be the floating ball displayed in this scenario. For another example, when a message notification control pops up on the home screen, the specific control is the popped up message notification control. In some embodiments, the specific control may alternatively be a recent task. This application sets no limitation on the specific control.

In the foregoing scenario of this application, the single-tap operation is used as an open operation for opening an application in a floating window. In another embodiment of this application, an application may be opened through different operations in different scenarios. For example, in a scenario in which the specific control is a floating ball, the open operation may be a single-tap operation. Specifically, the floating ball is single-tapped. In this case, the mobile phone determines whether there is a running program on the current screen, for example, a running application window. If there is no running program, it indicates that the current interface is the home screen background, and an application corresponding to the floating ball displays a corresponding application window in the full-screen manner. Alternatively, an application icon corresponding to the floating ball on the home screen may be tapped, to display the corresponding application window in the full-screen manner.

For another example, in a scenario of the notification message control, the open operation may be a drag-and-drop operation. For example, a bar (bar) below the message notification control in the mobile phone is dragged, to open an application window corresponding to a notification message in the full-screen manner. In addition, the specific control may alternatively be opened in a manner such as double tapping or more times of tapping, swiping, touching and holding, short pressing, finger joint percussion, or pupil gazing. A specific open operation is not limited in this embodiment of this application.

In the foregoing embodiments, an electronic device may be described by using a mobile phone as an example, and a single screen is used as an example for description. In some embodiments, the electronic device may be a mobile phone, a tablet, a computer, or the like, and a screen of the electronic device may be a single screen, a foldable screen, a curved screen, or the like, which are not limited herein.

The following describes the window display method in this embodiment of this application with reference to a specific structure of the electronic device.

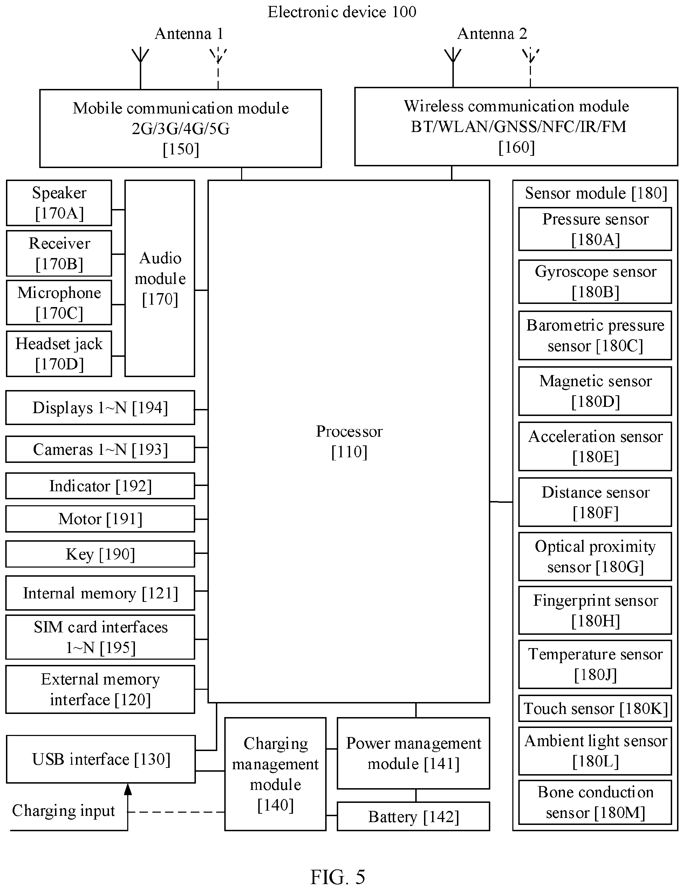

FIG. 5 is a schematic diagram of a structure of an electronic device 100. The electronic device 100 may include a processor 110, an external memory interface 120, an internal memory 121, a universal serial bus (universal serial bus, USB) connector 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a key 190, a motor 191, an indicator 192, a camera 193, a display 194, a subscriber identity module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It can be understood that the structure shown in this embodiment of the present invention does not constitute a specific limitation on the electronic device 100. In some other embodiments of this application, the electronic device 100 may include more or fewer components than those shown in the figure, some components may be combined, some components may be split, or components may be arranged in different manners. The components shown in the figure may be implemented by hardware, software, or a combination of software and hardware.

The processor 110 may include one or more processing units. For example, the processor 110 may include an application processor (Application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU), and the like. Different processing units may be independent components or may be integrated into one or more processors.

The processor 110 may generate an operation control signal based on instruction operation code and a timing signal, to complete control of instruction fetching and instruction execution.

A memory may be further disposed in the processor 110, and is configured to store instructions and data. In some embodiments, the memory in the processor 110 is a cache memory. The memory may store instructions or data recently used or cyclically used by the processor 110. If the processor 110 needs to use the instructions or the data again, the processor may directly invoke the instructions or the data from the memory. This avoids repeated access and reduces a waiting time of the processor 110, thereby improving system efficiency.

In some embodiments, when the processor 110 receives an open operation for a specific control, for example, a tap operation for an application in a side bar, the processor determines whether a current screen has a home screen background. If the current screen has the home screen background, the processor 110 controls the display 194 to display a corresponding application window in full screen, to meet visual experience of tending to display an application window in full screen in the home screen background.

In some embodiments of this application, when determining that a current interface is not the home screen background, the processor 110 may control the display 194 to display the application window in a form of a floating window. In some other embodiments, after determining that there is a running application on the screen, the processor 110 may further determine whether the running application is an application in a whitelist, and if the running application is an application in the whitelist, the processor may also control the display 194 to display in full screen an application tapped in the side bar.

It may be understood that an interface connection relationship between modules illustrated in this embodiment of the present invention is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

The electronic device 100 implements a display function by using the GPU, the display 194, the application processor, and the like. The GPU is a microprocessor for image processing and is connected to the display 194 and the application processor. The GPU is configured to perform mathematical and geometric computing for graphics rendering. The processor 110 may include one or more GPUs, and the one or more GPUs execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flex light-emitting diode (flex light-emitting diode, FLED), a Miniled, a MicroLed, a Micro-oLed, a quantum dot light emitting diode (quantum dot light emitting diodes, QLED), or the like. In some embodiments, the electronic device 100 may include one or N displays 194, where N is a positive integer greater than 1.

In an embodiment, the display 194 implements a full-screen display manner and a floating window display manner according to control instructions of the processor 110.

The internal memory 121 may be configured to store computer-executable program code, and the executable program code includes instructions. The internal memory 121 may include a program storage area and a data storage area. The program storage area may store an operating system, an application required by at least one function (for example, a sound playback function or an image playback function), and the like. The data storage area may store data (such as audio data and a phone book) and the like created in a use process of the electronic device 100. In addition, the internal memory 121 may include a high-speed random access memory, and may further include a non-volatile memory, for example, at least one magnetic disk storage device, a flash memory device, or a universal flash storage (universal flash storage, UFS). The processor 110 runs the instructions stored in the internal memory 121, and/or the instructions stored in the memory disposed in the processor, to perform various function applications and data processing of the electronic device 100.

In an embodiment of this application, the internal memory 121 may store instructions of the window display method. The processor 110 runs the instructions of the window display method, so that the display 194 of the electronic device 100 displays the application window in full screen or displays the application window in a form of a floating window after receiving an open operation performed by the user on a specific control application.

The pressure sensor 180Ais configured to sense a pressure signal, and may convert the pressure signal into an electrical signal. In some embodiments, the pressure sensor 180A may be disposed in the display 194. There are many types of pressure sensors 180A, for example, a resistive pressure sensor, an inductive pressure sensor, and a capacitive pressure sensor. The capacitive pressure sensor may include at least two parallel plates made of conductive materials. When force is applied to the pressure sensor 180A, a capacitance between electrodes changes. The electronic device 100 determines intensity of a pressure based on a change of the capacitance. When a touch operation is performed on the display 194, the electronic device 100 detects touch operation intensity by using the pressure sensor 180A. The electronic device 100 may also calculate a touch position based on a detected signal of the pressure sensor 180A. In some embodiments, touch operations performed at a same touch position but having different touch operation intensity may correspond to different operation instructions. For example, when a touch operation whose touch operation intensity is less than a first pressure threshold is performed on an SMS message application icon, an instruction for viewing an SMS message is executed. When a touch operation whose touch operation intensity is greater than or equal to the first pressure threshold is performed on the SMS message application icon, an instruction for creating a new SMS message is executed.

In some embodiments, after a user drags or taps the specific control on the display 194, the pressure sensor 180A is configured to sense a pressure signal of the user for the specific control, and may convert the pressure signal into an electrical signal. Therefore, the processor 110 may display the application window on the display 194 in full screen, in a form of a floating window, or the like based on the operation performed by the user on the specific control.

The touch sensor 180K is also referred to as a "touch device". The touch sensor 180K may be disposed on the display 194. The touch sensor 180K and the display 194 form a touchscreen, also referred to as a "touch control screen". The touch sensor 180K is configured to detect a touch operation acting on or near the touch sensor. The touch sensor may transmit a detected touch operation to the application processor to determine a type of a touch event. A visual output related to the touch operation may be provided by using the display 194. In some other embodiments, the touch sensor 180K may alternatively be disposed on a surface of the electronic device 100, at a position different from that of the display 194.

In some embodiments, in some embodiments, when the user touches an application, a bar, or the like in the specific control of the display 194 and performs an operation such as sliding up, sliding down, or tapping, the processor 110 receives an operation performed by the user on the specific control of the display 194, and in response to the operation, controls the display 194 to provide the visual output related to the touch operation.

A software system of the electronic device 100 may use a layered architecture, an event-driven architecture, a microkernel architecture, a microservice architecture, or a cloud architecture. In this embodiment of the present invention, an Android system with a layered architecture is used as an example to describe a software structure of the electronic device 100.

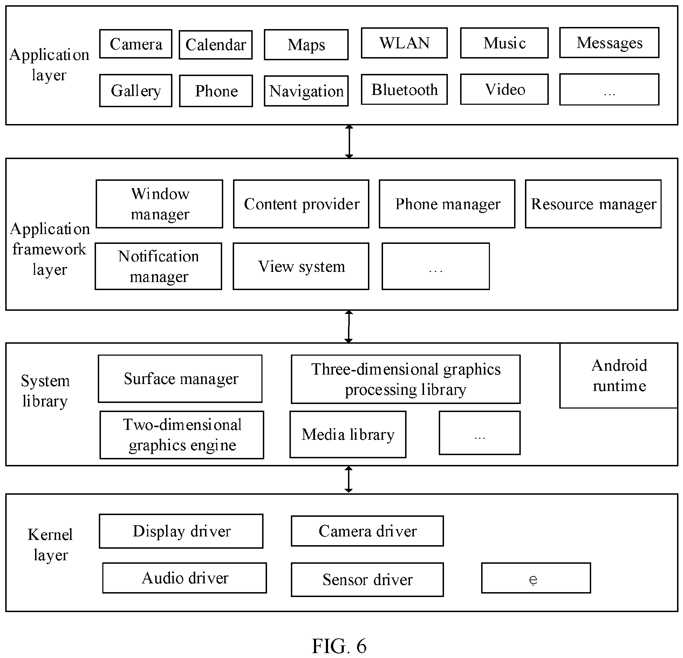

FIG. 6 is a block diagram of a software structure of an electronic device 100 according to an embodiment of the present invention.

In a layered architecture, software is divided into several layers, and each layer has a clear role and task. The layers communicate with each other through software interfaces. In some embodiments, the Android system is divided into four layers: an application layer, an application framework layer, an Android runtime (Android runtime) and system library, and a kernel layer from top to bottom.

The application layer may include a series of application packages.

As shown in FIG. 6, the application packages may include applications such as Camera, Gallery, Calendar, Phone, Map, Navigation, WLAN, Bluetooth, Music, Video, and Messages.

The application framework layer provides an application programming interface (Application programming interface, API) and a programming framework for applications at the application layer. The application framework layer includes some predefined functions.

As shown in FIG. 6, the application framework layer may include a window manager, a content provider, a view system, a phone manager, a resource manager, a notification manager, and the like.

The window manager is configured to manage a window program. The window manager may obtain a size of a display, determine whether a status bar exists, lock a screen, take a screenshot, and the like.

The content provider is configured to store and obtain data, and enable the data to be accessible to an application. The data may include a video, an image, audio, calls that are made and answered, a browsing history and bookmarks, a phone book, and the like.

The view system includes visual controls such as a text display control and a picture display control. The view system may be configured to build an application. A display interface may include one or more views. For example, a display interface including an SMS message notification icon may include a view for displaying a text and a view for displaying a picture.

The notification manager enables an application to display notification information in the status bar, and the notification information may be configured to convey a notification-type message and may automatically disappear after a short stay without requiring user interaction. For example, the notification manager is configured to provide a notification of download completion, a message reminder, and the like. The notification manager may alternatively be a notification that appears in the status bar at the top of the system in a form of a graph or scroll bar text, for example, a notification of an application running in the background, or a notification that appears on the screen in a form of a dialog window. For example, text information is prompted in the status bar, an alert sound is made, the electronic device vibrates, or an indicator light blinks.

In an embodiment of this application, the user may interact with the notification manager, and the notification manager may interact with the user through an operation performed by the user on a bar of a notification message bar, and determine information about an application that the user needs to open, so that the window manager determines a display size of a window.

The following describes examples of working procedures of software and hardware of the electronic device 100 with reference to a split-screen scenario.

When the touch sensor 180K receives a touch operation, a corresponding hardware interruption is sent to the kernel layer. The kernel layer processes the touch operation into an original input event (including information such as touch coordinates and a timestamp of the touch operation). The original input event is stored at the kernel layer. The application framework layer obtains the original input event from the kernel layer, and identifies a control corresponding to the input event. For example, the touch operation is a single-tap operation and a control corresponding to the single-tap operation is a camera application in the side bar. The camera application invokes an interface at the application framework layer, so that the camera application is started. Then, a camera driver is started by invoking the kernel layer, a shooting window is displayed in full screen, and a static image or a video is captured by using the camera 193.

The following uses a mobile phone as an example to describe in detail the window display method provided in this embodiment of this application. A plurality of applications are installed in the mobile phone. The window display method provided in this embodiment of this application may be applied to an electronic device that has a hardware structure shown in FIG. 5 and a software structure shown in FIG. 6, or an electronic device that has a similar hardware structure and software structure, for example, having more or fewer components than those shown in the figure, or combining some components, or splitting some components, or having different component arrangements.

The following uses a mobile phone as an example to describe in detail the window display method in this embodiment of this application.

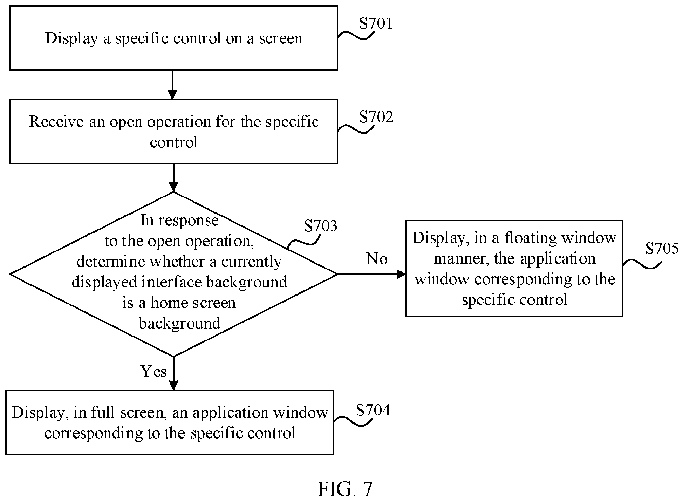

Refer to FIG. 7. FIG. 7 is a flowchart of a window display method according to an embodiment of this application. The method is performed by a mobile phone and includes S701-S705.

S701: Display a specific control on a screen.

It should be noted that the specific control in this embodiment of this application may be a side bar on a left or right side of the screen. The specific control may alternatively be a popped up notification message control. Alternatively, the specific control is a floating ball formed after an opened application is scaled down, or an application control (application icon). In addition, in some embodiments, the specific control may alternatively be a recent task or the like. This is not limited in this application.

In this embodiment of this application, a condition for triggering the mobile phone to perform S701 may be that the mobile phone receives swiping from a left edge or a right edge of the screen toward the inside of the screen, and triggers the side bar (specific control) to be displayed from the left side of the mobile phone or from the right side of the mobile phone. Alternatively, after receiving an operation for scaling down the opened application, the mobile phone triggers display of the floating ball (specific control). Alternatively, after the mobile phone receives an application message, the notification message bar (specific control) automatically pops up. The trigger condition is not limited in this application.

S702: Receive an open operation for the specific control.

The open operation may be a tap (including single-tap, double-tap, or more times of tapping) operation, or may be a drag operation after pressing the control, for example, an operation such as pressing and dragging (pulling down) a bar on a lower side of the notification message control, to open a selected application. These different operations described above may open applications based on different specific controls. For example, in a scenario in which the side bar is the specific control, a corresponding open operation may be a tap operation performed on an application icon in the side bar. For another example, in a scenario in which the floating ball is the specific control, a corresponding open operation may be a tap operation performed on the floating ball or a tap operation performed on an application corresponding to the floating ball. For another example, in a scenario in which a notification message pops up, a corresponding open operation may be a drag-and-drop operation or the like performed on a bar on a lower side of the notification message bar.

S703: In response to the open operation, determine whether a currently displayed interface background is a home screen background.

In this embodiment of this application, the mobile phone may determine, based on a running status of an application window in an interface of the mobile phone, whether the background is the home screen background. For example, if the mobile phone determines that there is a running application window in the current interface, it indicates that the current interface is a non-home screen background. If the mobile phone determines that there is no running application window, it indicates that the current interface is the home screen background.

In 703, when the mobile phone determines that the background is the home screen background, S704 is performed, that is, displaying, in full screen, an application window (content of an application) corresponding to the specific control.

In 703, if the mobile phone determines that the background is not the home screen background (non-home screen background), S705 is performed, that is, displaying, in a floating window manner, the application window corresponding to the specific control.

According to the window display method in this embodiment of this application, if the home screen is a background, the application window is opened in a full-screen manner. However, in the non-home screen background, the window display method meets a user preference for displaying an application in a full-screen manner in the home screen background, and also meets a natural viewing angle range of a human eye. In addition, in the non-home screen background, the application window is opened in a form of a floating window, an already running application window may not be completely shielded. User experience is improved by displaying a same operation in different ways based on different interface backgrounds.

It should be noted that, the foregoing displaying application content in a full-screen manner in the home screen background is merely an example description of this application. In some embodiments of this application, a user may determine, by setting interface backgrounds, to display application content in a full-screen manner in these interface backgrounds. For example, when the interface background is not the home screen background, the user may set, through the settings, some applications allowable to be covered, to implement that windows of the applications can still be displayed in full screen in a scenario in which an application is running. For example, if an alarm clock application window, a weather application window, a calculator application window, or a music-type application window is running on a current screen, the mobile phone may also display, in a full-screen manner, the application window corresponding to the specific control. These applications allowable to be covered can be set by using a whitelist. The user can add these applications to the whitelist allowed for full-screen display.

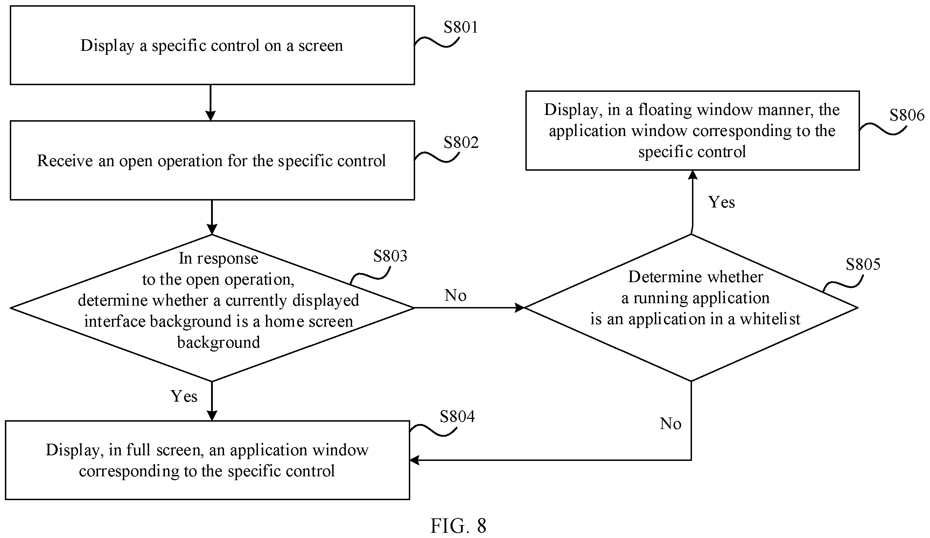

Refer to FIG. 8. FIG. 8 is a flowchart of another window display method according to an embodiment of this application. The method is performed by a mobile phone. As shown in FIG. 8, the method includes S801-S806.
S801: Display a specific control on a screen. This step corresponds to 701 in FIG. 7. For details, refer to the description in FIG. 701.
S802: Receive an open operation for the specific control. This step corresponds to 702 in FIG. 7. For details, refer to the description in FIG. 702.
S803: In response to the open operation, determine whether a currently displayed interface background is a home screen background. This step corresponds to 703 in FIG. 7. For details, refer to the description in FIG. 703.

In S803, when it is determined that the interface background is the home screen background, S804 is performed, that is, displaying, in full screen, an application window corresponding to the specific control.

In S803, when it is determined that the interface background is not the home screen background, that is, there is a running application window in the interface, it needs to further determine whether the application is an application in a whitelist, that is, S805 is performed.

S805: Determine whether a running application is an application in the whitelist.

If the running application is an application in the whitelist, S806 is performed, that is, displaying, in full screen, the application window corresponding to the specific control.

If the running application is not an application in the whitelist, S804 is performed, that is, displaying, in a floating window manner, the application window corresponding to the specific control.

According to the window display method in this embodiment of this application, an application may be displayed in a full-screen manner as much as possible, to adapt to a user's usage preference, and also meet a natural viewing angle range of a human eye, thereby improving user experience.

The following describes the window display methods in FIG. 7 and FIG. 8 in the embodiments of this application with reference to interface operations in several different scenarios.

Scenario 1: Open an application through a side bar.

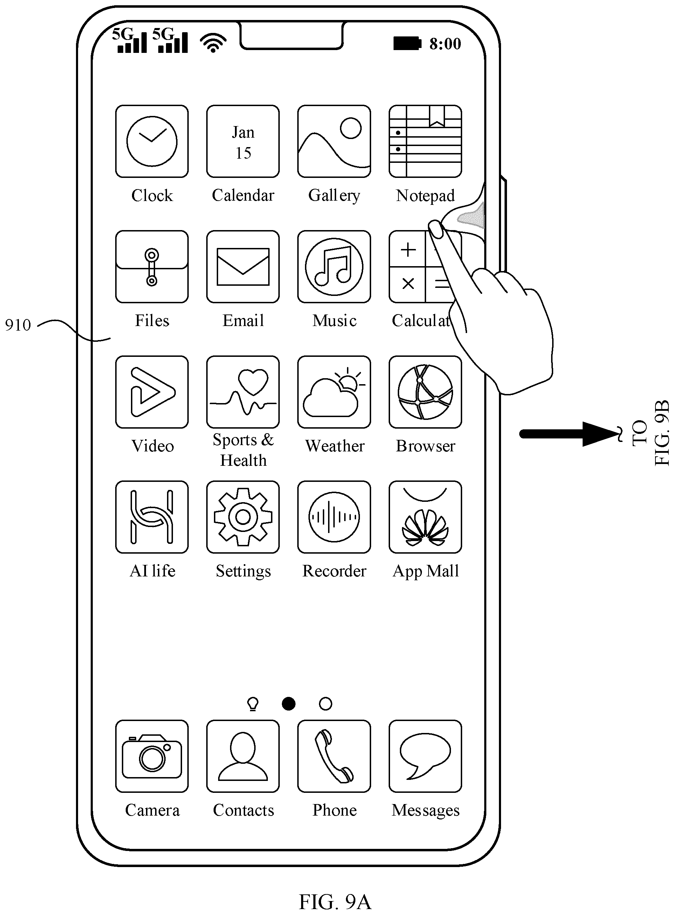

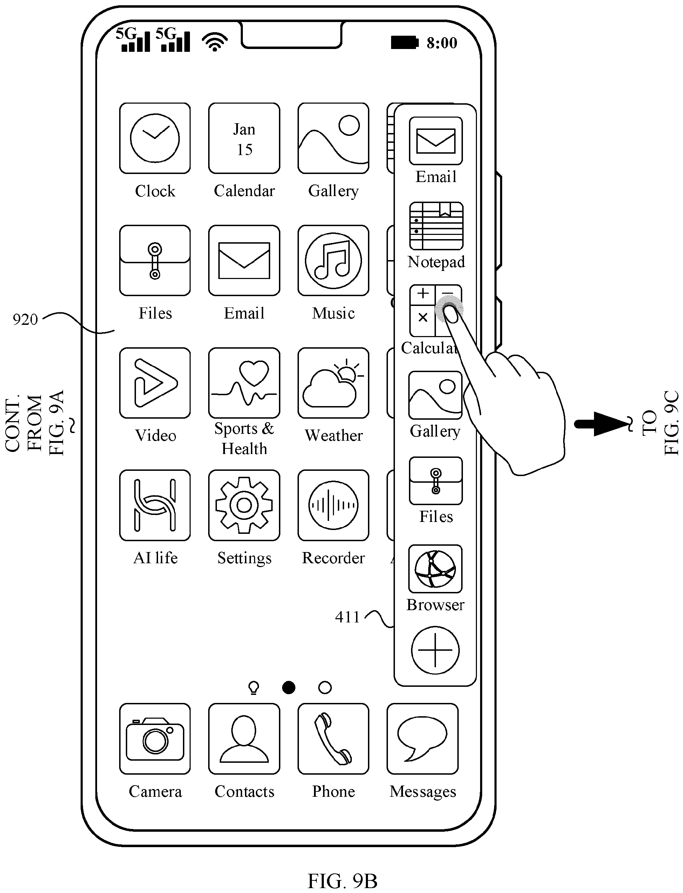

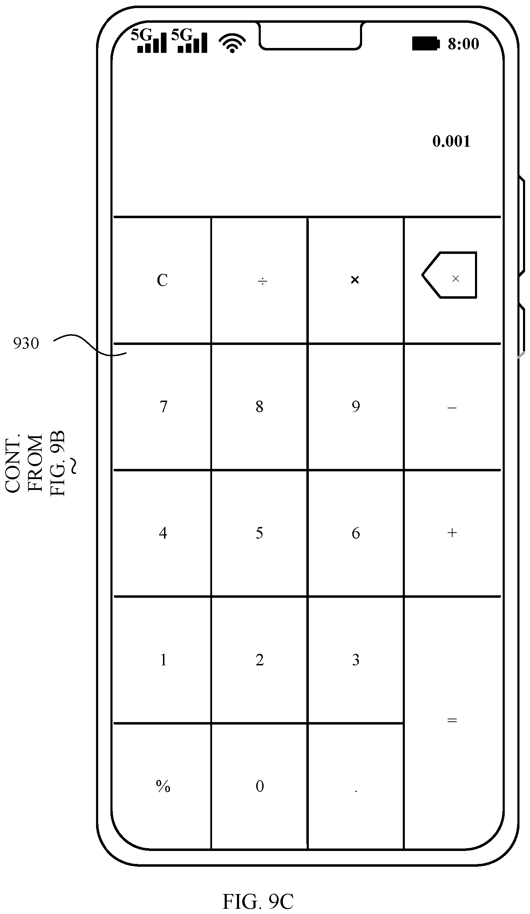

Refer to FIG. 9A, FIG. 9B, and FIG. 9C. FIG. 9A, FIG. 9B, and FIG. 9C are schematic diagrams of operation interfaces of opening, by a user, an application window through the side bar in a home screen background. This process corresponds to the method shown in FIG. 7. As shown in FIG. 9A, in an interface 910, the background is the home screen background. When the user wants to open an application through the side bar, the user swipes inwards from an edge of a screen to invoke the side bar. As shown in FIG. 9B, the side bar (a pop-up application bar) is displayed in an interface 920. When the user single-taps a "calculator" application in the side bar, the mobile phone displays in full screen when identifying that a current background is the home screen background. As shown in FIG. 9C, in an interface 930, an application window corresponding to the calculator application is displayed in full screen.

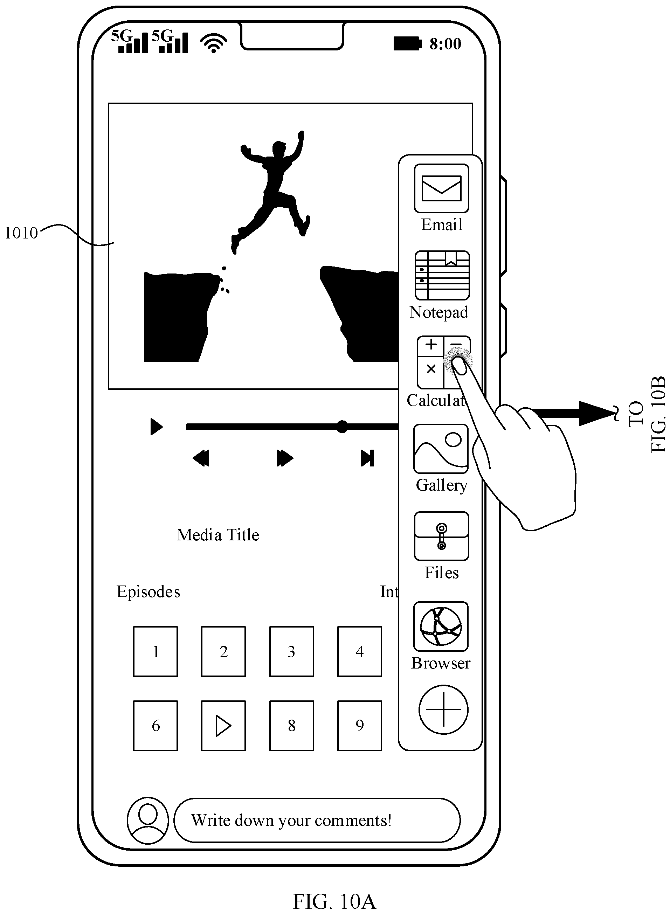

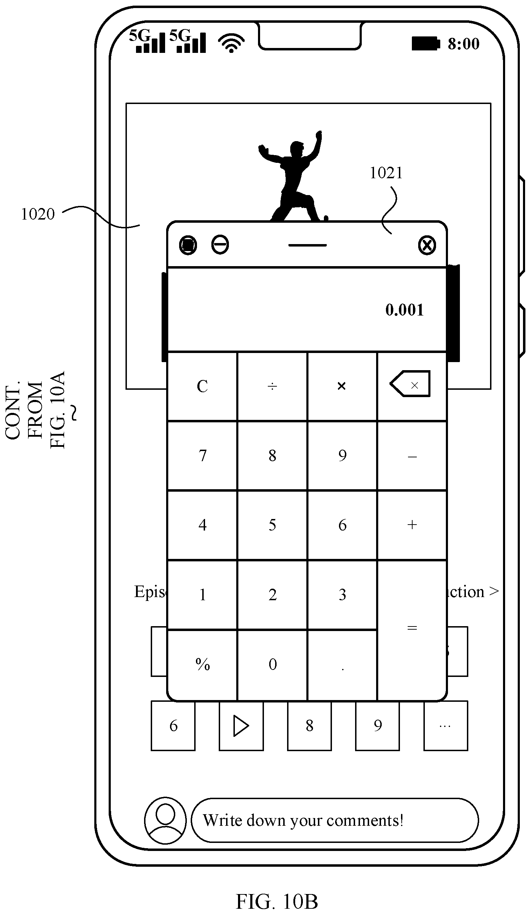

Refer to FIG. 10A and FIG. 10B. FIG. 10A and FIG. 10B are a schematic diagram of operation interfaces of opening, by a user, an application window through a side bar in a non-home screen background. As shown in FIG. 10A, there is already a video application window running in the interface 1010. After the user taps the "calculator" application in the side bar, the mobile phone determines that the current background is a non-home screen background, and opens the application in a form of a floating window. As shown in FIG. 10B, in an interface 1020, a window corresponding to the calculator is superposed on a video application window in a form of a floating window 1021 for display. Therefore, display of different windows is implemented based on different interface backgrounds, and display is performed in full screen as much as possible, to meet more comfortable visual experience of full-screen display. In addition, when there is a running application window in the interface, two applications may be superposed for display, so that the user can simultaneously see two running application windows.

In some embodiments of this application, the user may add some applications to the whitelist by setting, so that when an application in the whitelist is already running on the screen, the user taps an application icon in the side bar, and the mobile phone can display an application window in full screen.

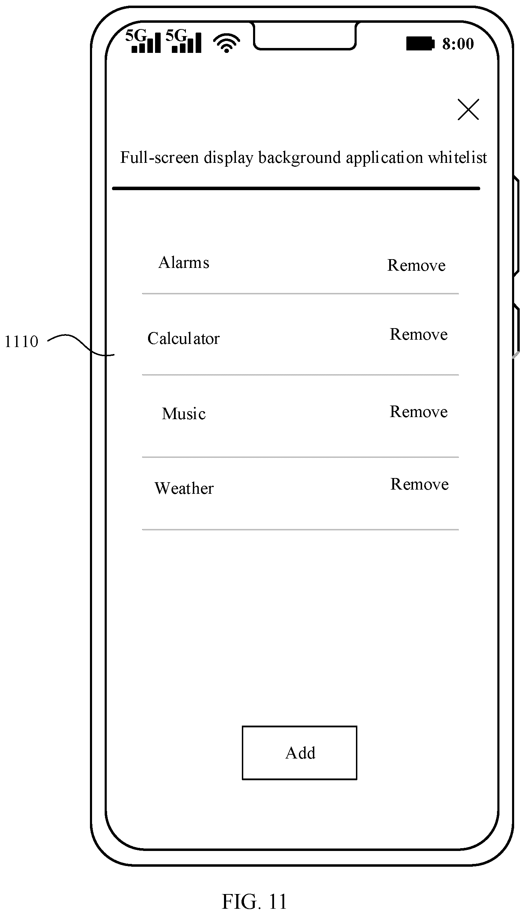

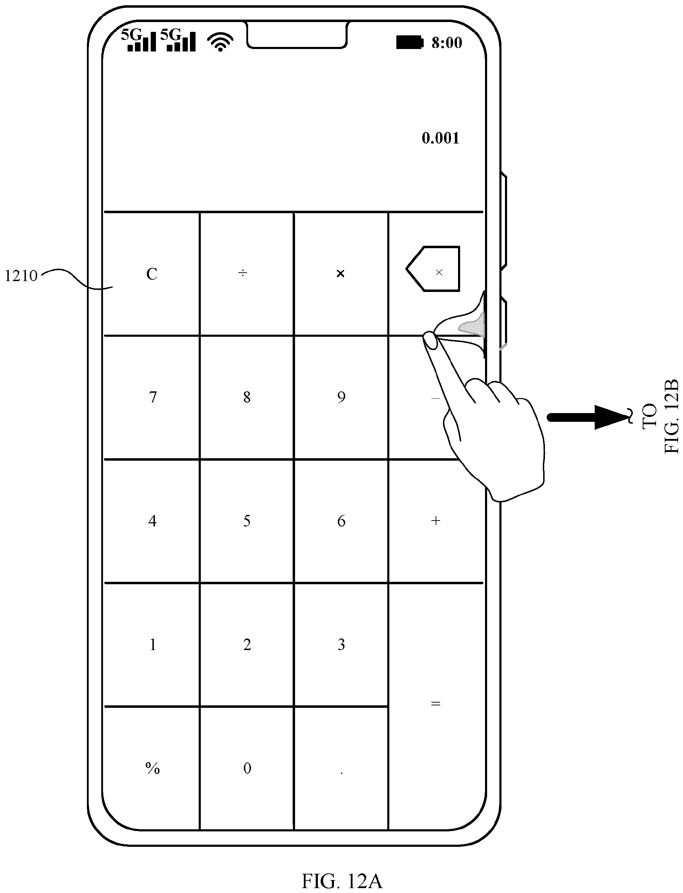

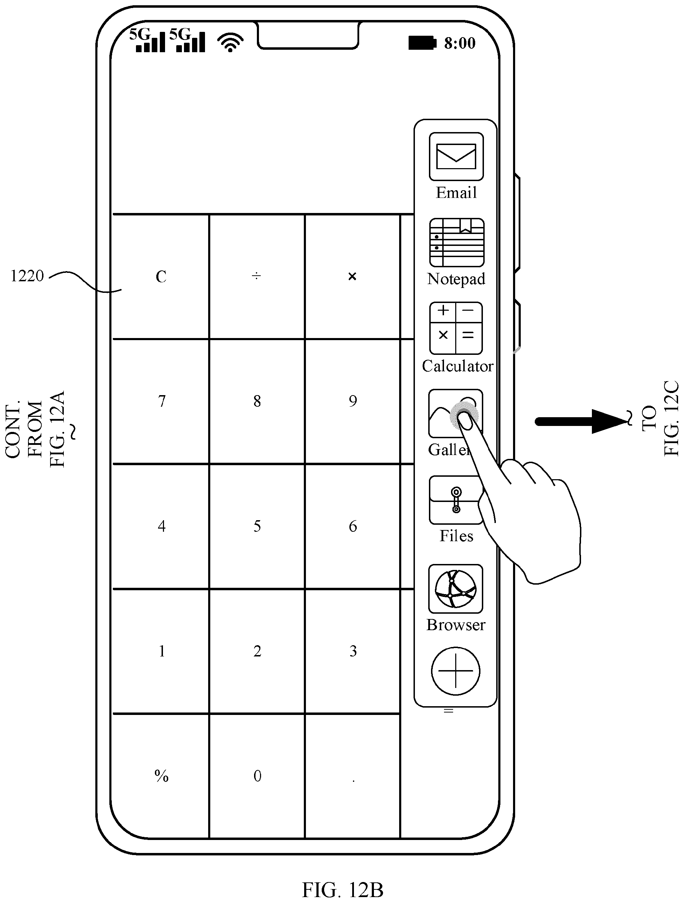

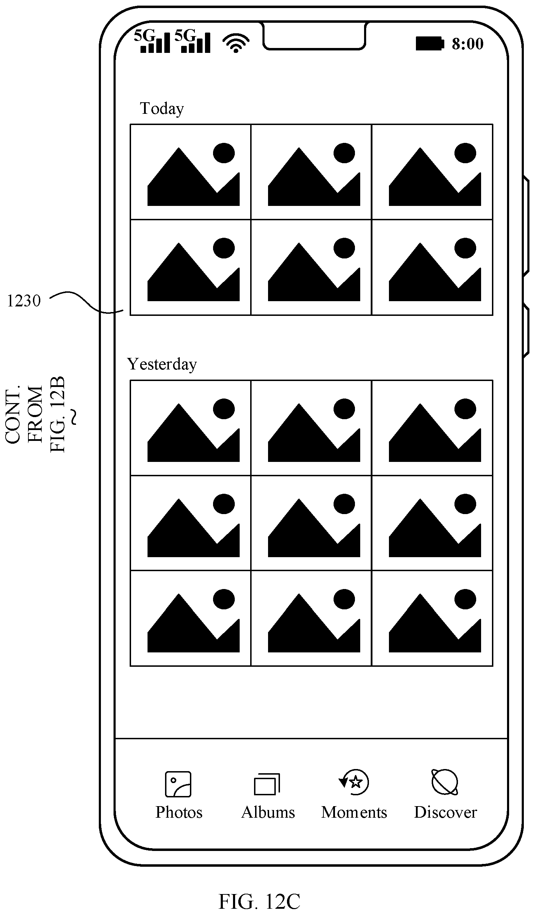

Refer to FIG. 11. FIG. 11 is a schematic diagram of an interface of an application whitelist. As shown in FIG. 11, after the user opens a setting application, a "full-screen display background application whitelist" is opened to obtain an interface 1110. In the interface 1110, the user may set an application allowable to be covered in display in the list, for example, an "alarm clock" application, a "calculator" application, a "music" application, and a "weather" application, and add these applications to applications in the whitelist. The user may further add another application by using an "add" function key, or delete an application in the whitelist by using a "remove" function key, providing the user with the freedom to choose. When the mobile phone performs an open operation in the form of a floating window, if it is determined that an application running on the screen is an application in the whitelist, the mobile phone still displays a selected application window in full screen. For this process, references may be made to the method shown in FIG. 8 and to a schematic diagram of an interface operation in FIG. 12A, FIG. 12B, and FIG. 12C.

FIG. 12A, FIG. 12B, and FIG. 12C are a schematic diagram of an interface operation during running of an application in a whitelist. As shown in FIG. 12A, in an interface 1210, there is already a calculator application window running in full screen. The user invokes the side bar by swiping from the right side of the screen. As shown in FIG. 12B, in an interface 1220, the user taps a "gallery" application in the side bar. In this case, the mobile phone determines that the currently running application is an application in the whitelist, and still displays in full screen. As shown in FIG. 12C, in an interface 1230, an application window corresponding to the gallery is displayed in full screen. This process corresponds to the method shown in FIG. 8.

Scenario 2: Open an application through a popped up notification message bar.

Generally, an application in the mobile phone receives a message. The mobile phone displays at least a part of content of the application message in the notification message bar in a pop-up manner, to remind the user of the application message. Alternatively, the user may directly view the message from the notification message bar, or may open an application window corresponding to the message through an open operation.

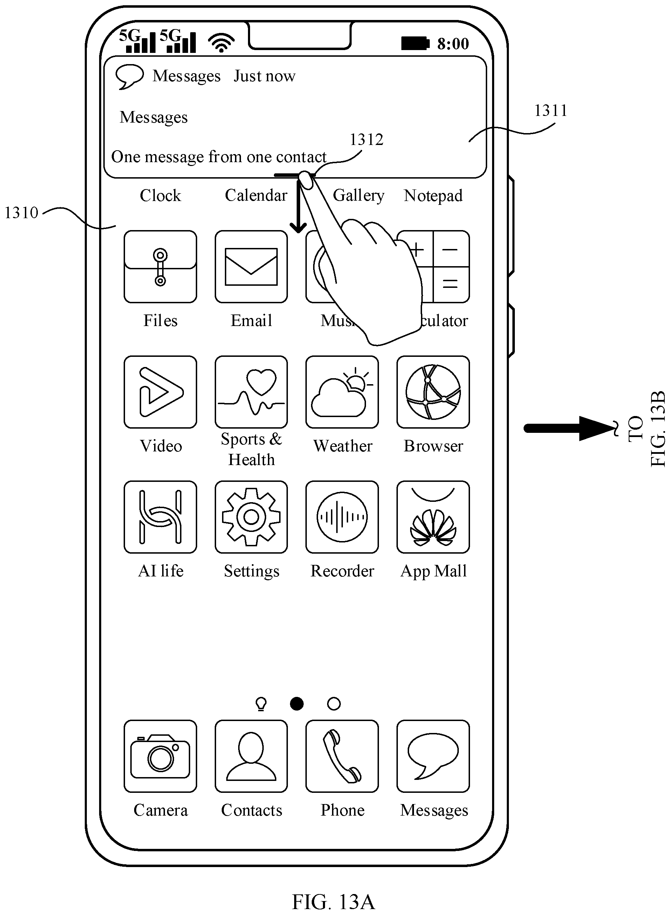

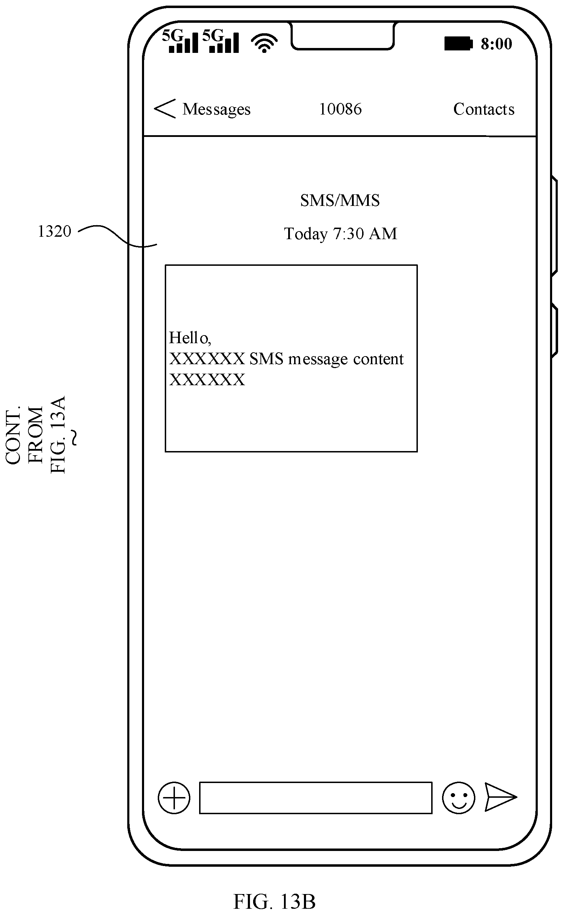

Refer to FIG. 13A and FIG. 13B. FIG. 13A and FIG. 13B are a schematic diagram of an interface operation for opening an application window from a notification message bar. As shown in FIG. 13A, in an interface 1310, a notification message bar 1311 pops up in the home screen background. Content in the notification message bar is "One message from one contact". If the user wants to open an application to view the message, the user presses and pulls down (drags) the bar 1311, and the mobile phone identifies that the current application is in the home screen background. In this case, the mobile phone displays a message application window in full screen, as shown in FIG. 13B. In an interface 1320, a chat interface window corresponding to a WeChat application is displayed in full screen, which is convenient for the user to reply to information in time. In addition, the full-screen display improves visual experience of the user.

In an embodiment of this application, in the scenario corresponding to FIG. 13A and FIG. 13B, if there is a running application in the interface 1310, the window is displayed in a form of a floating window when the user performs the operation on the bar 1311. For the floating window display form of the window, refer to the floating window form shown in FIG. 10B for displaying the window of the WeChat application. Examples are not described herein again. In addition, the scenario may also be determined by using an application in the whitelist. For setting of the whitelist, refer to FIG. 11. For a determining process, refer to the method shown in FIG. 8. Details are not described herein again.

Scenario 3: Open an application through a floating ball.

In this scenario, after the user opens an application window in a form of a small window, for example, the user opens the application window through a side bar and then minimizes the application window, the application window is displayed in a form of a floating ball in an interface.

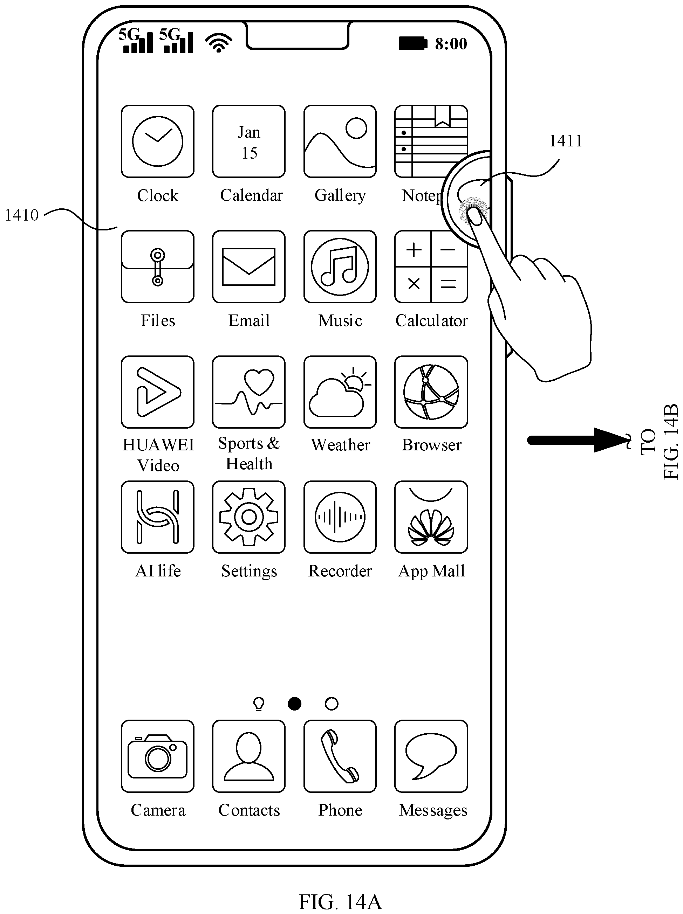

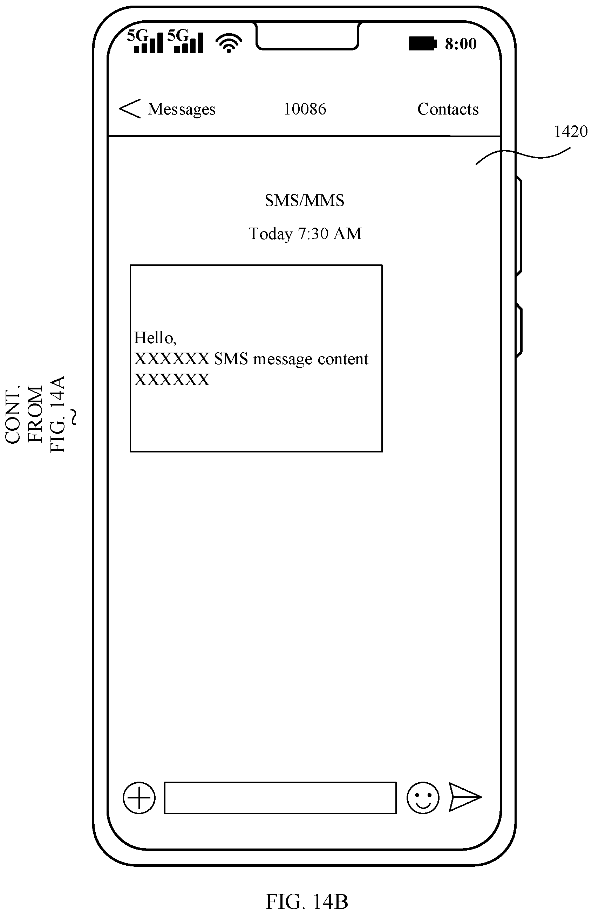

Refer to FIG. 14A and FIG. 14B. FIG. 14A and FIG. 14B are a schematic diagram of an interface operation for opening an application window from a floating ball according to an embodiment of this application. As shown in FIG. 14A and FIG. 14B, a floating ball 1411 formed after an opened information application is scaled down is displayed on an interface 1410. After the user taps the floating ball, the mobile phone determines that a current background interface is a home screen background. In this case, the mobile phone displays an SMS message chat window in full screen. As shown in FIG. 14B, the SMS message window is displayed in full screen on an interface 1420. Certainly, the floating ball may be located anywhere on the screen, and a floating position of the side floating ball 1411 is not limited in this application.

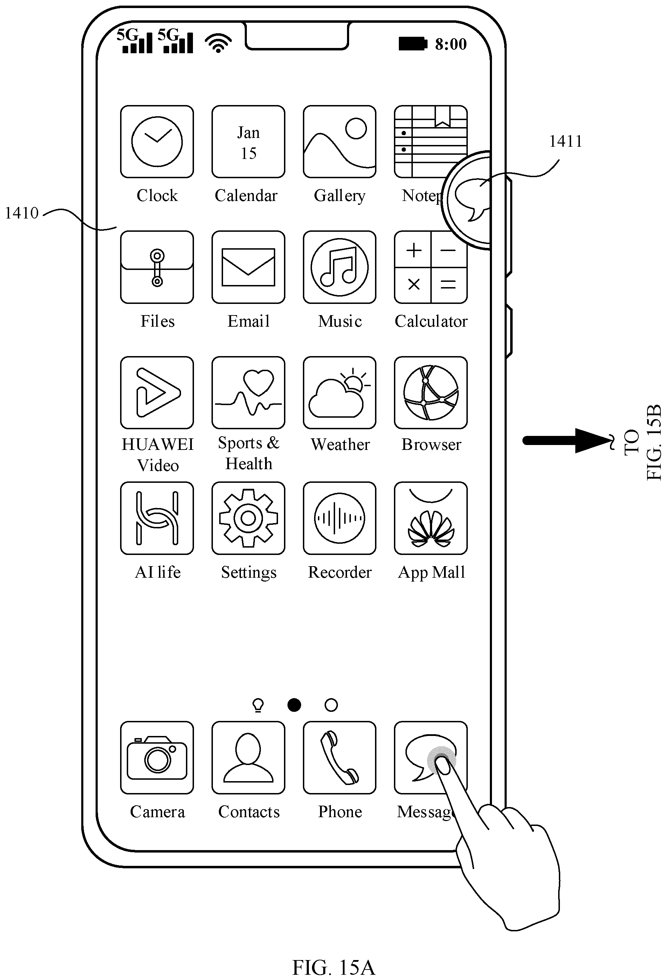

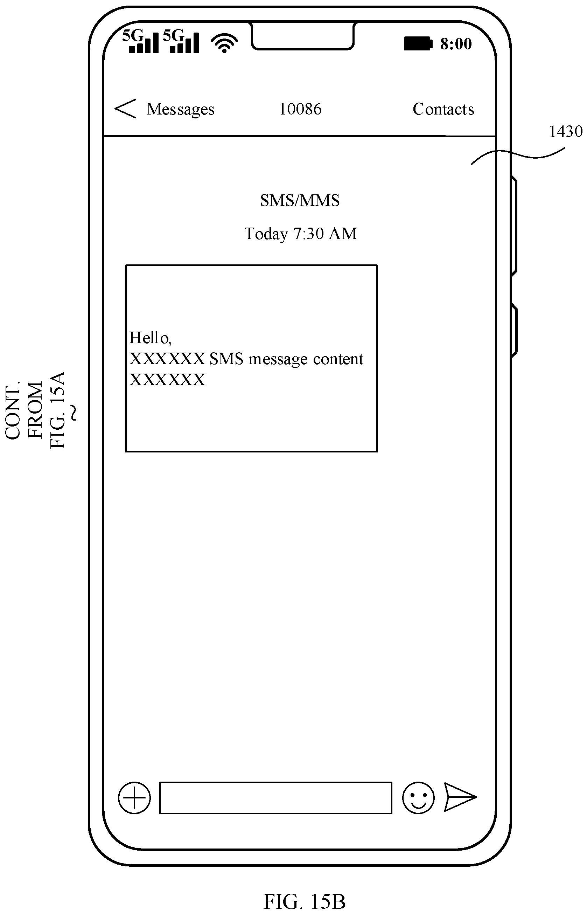

In this embodiment of this application, an SMS message application may be directly tapped in the interface 1410, to implement full-screen display of the application window. FIG. 15A and FIG. 15B are a schematic diagram of another interface operation for opening an application window from a floating ball. After the user taps the SMS message application that is in the interface 1410 and that corresponds to the floating ball 1411, as shown in FIG. 15B, an SMS message application window is displayed in full screen.

In an embodiment of this application, in the scenario corresponding to FIG. 14A and FIG. 14B, if an interface is a non-home screen background, an application may be opened in a small window manner.

In addition, in the scenario corresponding to FIG. 14A and FIG. 14B, when an application running in the interface is an application in the whitelist, an application window may also be displayed in full screen. For details, refer to the descriptions in FIG. 11, FIG. 12A, FIG. 12B, and FIG. 12C. Details are not described herein.

In another scenario in this embodiment of this application, for example, when an application is opened in a recent task, if there is no running application on the screen, the opened application is displayed in full screen. Alternatively, if there is a running application on the screen and the application is an application in the whitelist, the opened application may also be displayed in full screen. This is not limited in this application.

According to the method in this embodiment of this application, a display manner of a floating window is optimized, that is, a corresponding application may be opened in full screen in a home screen background or a white list application background. Compared with an existing floating window form, in this application, an application window may be displayed in full screen as much as possible to improve visual experience of the user, and full-screen display or floating window display may be performed based on an interface background state, thereby improving user experience.

This application further provides an electronic apparatus, including:
a receiving module, configured to receive an open operation for a specific control displayed on a screen of an electronic device, where the open operation is used to present, in a floating window manner, content of an application corresponding to the specific control; and
a processing module, configured to: in response to the open operation, when it is determined that a current display interface of the electronic device is a home screen background, display the content of the application in full screen by using a display module.

In an embodiment of this application, the open operation is at least one tap on the specific control, or dragging the specific control.

In an embodiment of this application, the specific control is a pop-up control.

In an embodiment of this application, the pop-up control is a popped up notification message control, for example, a notification message bar.

In an embodiment of this application, the open operation is a drag operation performed on a bar in the popped up notification message control.

In an embodiment of this application, the pop-up control is a pop-up application bar, for example, a side bar.

In an embodiment of this application, the open operation is a tap operation for an application icon in the pop-up application bar.

In an embodiment of this application, the specific control is a floating control, for example, a floating ball.

In an embodiment of this application, the open operation is a direct open operation for the floating control.

In an embodiment of this application, the open operation is an open operation for an application icon that is on a home screen and that corresponds to the floating control.

An embodiment of this application further provides an electronic device, including:
a memory, configured to store instructions to be executed by one or more processors of the device; and
a processor, configured to perform the methods explained in the foregoing embodiments with reference to FIG. 7 and FIG. 8.

This application further provides a computer-readable storage medium. The computer-readable storage medium stores a computer program. When the computer program is run by a processor, the processor is enabled to perform the methods explained in FIG. 7 and FIG. 8 in the foregoing embodiments.

This application further provides a computer program product including instructions. When the computer program product runs on an electronic device, a processor is enabled to perform the methods shown in FIG. 7 and FIG. 8 in the foregoing embodiments.

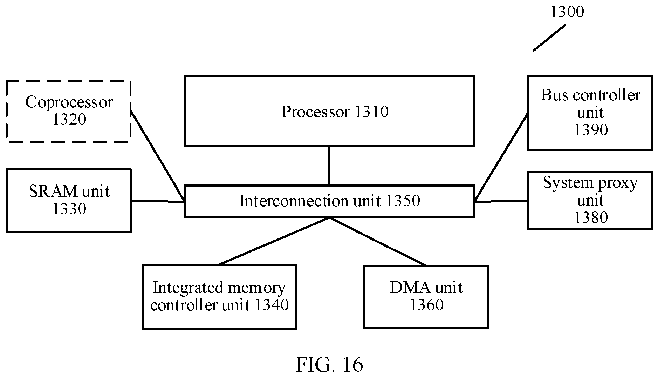

Refer to FIG. 16, a block diagram of an SoC (System on Chip, system on chip) 1300 according to an embodiment of this application. In FIG. 16, similar components have a same reference numeral. In addition, a dashed-line box is an optional feature of a more advanced SoC. In FIG. 16, the SoC 1300 includes: an interconnection unit 1350, coupled to an application processor 1310; a system proxy unit 1380; a bus controller unit 1390; an integrated memory controller unit 1340; a group of or one or more coprocessors 1320, where the coprocessor may include integrated graphics logic, an image processor, an audio processor, and a video processor; a static random access memory (Static Random Access Memory, SRAM) unit 1330; and a direct memory access (DMA) unit 1360. In an embodiment, the coprocessor 1320 includes a dedicated processor, such as a network or communication processor, a compression engine, a general-purpose computing on graphics processing unit (General Purpose Computing on GPU, GPGPU), a high-throughput many integrated core (Many Integrated Core, MIC) processor, or an embedded processor.

The static random access memory (SRAM) unit 1330 may include one or more computer-readable media configured to store data and/or instructions. The computer-readable storage medium may store instructions, and specifically store temporary and permanent copies of the instructions. The instructions may include the following: When the instructions are executed by at least one unit in the processor, the SoC 1300 is enabled to perform the methods in the foregoing embodiments. For details, refer to the processing methods explained in FIG. 7 and FIG. 8 in the foregoing embodiments. Details are not described herein again.

Embodiments of mechanisms disclosed in this application may be implemented by using hardware, software, firmware, or a combination of these implementation methods. The embodiments of this application may be implemented as a computer program or program code executed on a programmable system. The programmable system includes at least one processor, a storage system (including a volatile memory and a non-volatile memory and/or a storage element), at least one input device, and at least one output device.

The program code may be applied to an input instruction to perform various functions described in this application and generate output information. The output information may be applied to one or more output devices in a known manner. For the purpose of this application, the processing system includes any system having a processor such as a digital signal processor (Digital Signal Processor, DSP), a microcontroller, an application-specific integrated circuit (Application Specific Integrated Circuit, ASIC), or a microprocessor.

The program code may be implemented by using an advanced programming language or an object-oriented programming language, to communicate with the processing system. When required, the program code may also be implemented by using an assembly language or a machine language. In fact, the mechanisms described in this application are not limited to a scope of any specific programming language. In any scenario, the language may be a compilation language or an interpretation language.

In some cases, the disclosed embodiments may be implemented by hardware, firmware, software, or any combination thereof. The disclosed embodiments may be further implemented as instructions carried or stored on one or more transitory or non-transitory machine-readable (for example, computer-readable) storage media, and the instructions may be read and executed by one or more processors. For example, the instructions may be distributed by using a network or another computer-readable medium. Therefore, the machine-readable medium may include any mechanism used to store or transmit information in a machine (for example, computer) readable form, including but not limited to a floppy disk, an optical disk, an optical disc, a compact disc read-only memory (Compact Disc Read Only Memory, CD-ROMs), a magneto-optical disk, a read-only memory (Read Only Memory, ROM), a random access memory (RAM), an erasable programmable read-only memory (Erasable Programmable Read Only Memory, EPROM), an electrically erasable programmable read-only memory (Electrically Erasable Programmable Read Only Memory, EEPROM), a magnetic card or an optical card, a flash memory, or a tangible machine-readable memory configured to transmit information (such as a carrier, an infrared signal, and a digital signal) via the Internet in electrical, optical, or acoustic form or another form of propagation signal. Therefore, the machine-readable medium includes any type of machine-readable medium suitable for storing or transmitting electronic instructions or information in the machine (for example, computer) readable form.

In the accompanying drawings, some structure or method features may be shown in a particular arrangement and/or order. However, it should be understood that such specific arrangement and/or sorting may not be required. Instead, in some embodiments, these features may be described in a manner and/or order different from that shown in the accompany drawings of the specification. In addition, inclusion of the structure or method features in a particular figure does not imply that all embodiments need to include the features. In some embodiments, these features may not be included, or these features may be combined with other features.

It should be noted that all the units/modules mentioned in the device embodiments of this application are logical units/modules. Physically, a logical unit/module may be a physical unit/module, or may be a part of a physical unit/module, or may be implemented as a combination of a plurality of physical units/modules. Physical implementations of these logical units/modules are not most important, and only a combination of functions implemented by these logical units/modules is a key to resolving the technical problem proposed in this application. In addition, to highlight the innovative part of this application, in the foregoing device embodiments of this application, units/modules that are not closely related to resolving the technical problem proposed in this application are not introduced. This does not mean that no other units/modules exist in the foregoing device embodiments.

It should be noted that in the examples and specification of this patent, relational terms such as first and second are only used to distinguish one entity or operation from another entity or operation, and do not necessarily require or imply that there is any such actual relationship or order between these entities or operations. In addition, the term "include", "comprise", or any other variant thereof is intended to cover non-exclusive inclusion, so that a process, method, article, or device that includes a series of elements includes not only those elements but also other elements that are not expressly listed, or includes elements inherent to such a process, method, article, or device. Without further limitation, the element defined by the sentence "including a" does not exclude that other identical elements also exist in the process, method, article, or device including the element.

Although this application has been illustrated or described with reference to some preferred embodiments of this application, a person of ordinary skill in the art should understand that various modifications may be made to forms and details without departing from the spirit and scope of this application.

## Claims

1. A window display method, applied to an electronic device, wherein the method comprises:
receiving an open operation for a specific control displayed on a screen of the electronic device; and
in response to the open operation, when it is determined that a current display interface of the electronic device is a home screen background, displaying, by the electronic device, content of the application in a full-screen manner; or when it is determined that there is a program running on the current display interface of the electronic device, displaying, by the electronic device, the content of the application in a floating window manner.

2. The method according to claim 1, wherein the open operation is at least one tap on the specific control, or dragging the specific control.

3. The method according to claim 1 or 2, wherein the specific control is a pop-up control.

4. The method according to claim 3, wherein the pop-up control is a popped up notification message control.

5. The method according to claim 4, wherein the open operation is a drag operation performed on a bar in the popped up notification message control.

6. The method according to claim 3, wherein the pop-up control is a pop-up application bar.

7. The method according to claim 3, wherein the open operation is a tap operation for an application icon in the pop-up application bar.

8. The method according to claim 1 or 2, wherein the specific control is a floating control.

9. The method according to claim 8, wherein the open operation is a direct open operation for the floating control.

10. The method according to claim 8, wherein the open operation is an open operation for an application icon that is on a home screen and that corresponds to the floating control.

11. An electronic device, comprising:
a memory, configured to store instructions to be executed by one or more processors of the device; and
a processor, configured to execute the instructions, to enable the electronic device to perform the method according to any one of claims 1 to 10.

12. A computer-readable storage medium, wherein the computer-readable storage medium stores a computer program, and when the computer program is run by a processor, the processor is enabled to perform the method according to any one of claims 1 to 10.

13. A computer program product comprising instructions, wherein when the computer program product runs on an electronic device, a processor is enabled to perform the method according to any one of claims 1 to 10.
